# FASCICULE DE BREVET EUROPEEN

(11) **EP 3 548 382 B1**
(45) Date de publication et mention de la délivrance du brevet: **09.09.2020**
(21) Numéro de dépôt: 17816555.1
(22) Date de dépôt: 29.11.2017
(51) Int. Cl.: B64F 1/12

(54) **PLATEFORME NAVALE ÉQUIPÉE D'UNE ZONE D'APPONTAGE/DÉCOLLAGE D'AU MOINS UN AÉRONEF ET DE MOYENS EN FORME DE CHARIOT DE MANUTENTION DE CELUI-CI**
MARINEPLATTFORM MIT EINEM BEREICH FÜR LANDUNG/START AN DECK VON MINDESTENS EINEM FLUGZEUG UND WAGENARTIGE VORRICHTUNG ZUR HANDHABUNG DIESES FLUGZEUGS
NAVAL PLATFORM PROVIDED WITH A ZONE FOR THE DECK LANDING/TAKE-OFF OF AT LEAST ONE AIRCRAFT AND DOLLY-TYPE MEANS FOR HANDLING SAID AIRCRAFT

(30) Priorité: 01.12.2016 FR 1601701
(43) Date de publication de la demande: 09.10.2019
(73) Titulaire: Naval Group, 75015 Paris (FR)
(72) Inventeur: BAURY, Alexandre, 16600 Ruelle sur Touvre (FR); RASPIC, Pierre, 16600 Ruelle sur Touvre (FR); CELLARIO, Solange, 16600 Ruelle sur Touvre (FR)
(74) Mandataire: Lavoix
(86) Numéro de dépôt international: PCT/EP2017/080779
(87) Numéro de publication internationale: WO 2018/099948

(56) Documents cités:
- WO-A1-2013/132114
- WO-A1-2016/155883
- GB-A- 1 533 714
- GB-A- 190 623 640
- US-A- 4 174 081
- US-B1- 6 176 671

## Description

La présente invention concerne une plateforme navale.

Plus particulièrement l'invention se rapporte à une plateforme navale équipée d'une zone d'appontage/décollage d'au moins un aéronef.

On trouvera des exemples de telles plateformes dans les documents WO2016/155883 et US 6 176 671.

De telles plateformes navales sont par exemple, constituées par des navires de surface tels que des corvettes, des frégates ou encore des bâtiments de projection voire des porte-aéronefs.

Bien entendu d'autres plateformes telles que par exemple, des plateformes pétrolières offshores ou autres, équipées de zones destinées à recevoir des hélicoptères peuvent également être envisagées.

De façon classique, ces plateformes sont également équipées de moyens en forme de chariot de manutention de l'aéronef pour le déplacer sur la plateforme.

Ainsi par exemple, et dans le cas où la plateforme est constituée par une corvette ou une frégate, de tels moyens en forme de chariot de manutention sont utilisés pour déplacer par exemple, un hélicoptère entre la zone d'appontage/décollage de la plateforme et un hangar de stockage de celui-ci, prévu à proximité de cette zone dans cette plateforme.

De nombreux moyens en forme de chariot de manutention ont déjà été proposés pour ce type d'applications dans l'état de la technique.

Ceux-ci comportent de façon générale des moyens de stockage d'énergie, des moyens de motorisation et des moyens d'accouplement à l'aéronef, permettant à un opérateur de venir saisir l'aéronef afin de le déplacer.

Mais ces moyens en forme de chariot de manutention présentent un certain nombre d'inconvénients dans l'application envisagée à bord d'une telle plateforme.

En effet et pour différentes raisons opérationnelles, il doit être possible de déplacer l'aéronef et notamment un hélicoptère sur une telle plateforme, par mer formée voire très formée, et par des vents violents.

La plateforme est alors soumise à des mouvements relativement importants se traduisant par des risques de mouvements incontrôlés de l'aéronef sur la plateforme et plus particulièrement sur la zone d'appontage/décollage.

L'aéronef peut en effet subir des efforts provoquant un glissement total ou partiel voire un basculement de celui-ci.

On peut facilement imaginer les répercussions d'une telle perte de contrôle de l'aéronef non seulement pour sa structure et celle de la plateforme mais également pour les opérateurs embarqués à bord et en particulier le personnel affecté à la partie aviation de la plateforme.

Le but de l'invention est donc de résoudre ces problèmes.

A cet effet l'invention a pour objet une plateforme navale équipée d'une zone d'appontage/décollage d'au moins un aéronef et de moyens en forme de chariot de manutention de cet aéronef pour le déplacer sur cette zone d'appontage/décollage, caractérisée en ce que les moyens en forme de chariot comportent des moyens formant ventouse d'immobilisation du chariot et donc de sécurisation de l'aéronef en position sur la zone d'appontage/décollage, dont le fonctionnement est déclenché par des moyens d'analyse du comportement de la plateforme afin d'éviter tout risque de mouvement incontrôlé de l'aéronef.

La plateforme selon l'invention peut comprendre l'une ou plusieurs des caractéristiques suivantes, prise(s) isolément ou suivant toute combinaison techniquement possible :
- les moyens d'analyse des mouvements de la plateforme comportent des moyens de mesure des mouvements de roulis, de tangage, de lacet et/ou de pilonnement de la plateforme afin de détecter tout risque de glissement et/ou de basculement de l'aéronef et déclencher le fonctionnement des moyens formant ventouse ;
- les moyens formant ventouse comportent une plaque de support munie d'une couche de matériau d'adhésion et d'appui sur la plateforme et associée à des moyens d'actionnement et de déploiement de ceux-ci, d'une position escamotée permettant le déplacement de l'aéronef vers une position active d'immobilisation et de sécurisation de celui-ci ;
- les moyens en forme de plaque comprennent des portions de plaque articulées les unes sur les autres ;
- les moyens en forme de plaque comprennent des moyens de fixation articulée sur le reste du chariot à travers des moyens à rotule ;
- les moyens formant ventouse sont reliés à des moyens de génération d'un vide d'air entre ceux-ci et la plateforme, en position d'immobilisation de l'aéronef ;
- il est prévu une pluralité de conduits d'aspiration s'étendant entre les moyens formant ventouse et les moyens de génération de vide ;
- les moyens d'actionnement et de déploiement des moyens formant ventouse comprennent des vérins ;
- elle comporte un hangar de stockage pour l'aéronef et les moyens en forme de chariot de manutention sont adaptés pour déplacer cet aéronef entre ce hangar et la zone d'appontage/décollage ;
- la zone d'appontage/décollage est équipée d'une grille de harponnage pour l'aéronef.

L'invention sera mieux comprise à l'aide de la description qui va suivre, donnée uniquement à titre d'exemple et faite en se référant aux dessins annexés, sur lesquels :
- la figure 1 représente une vue partielle en perspective d'un exemple de réalisation d'une plateforme navale selon l'invention, équipée d'une zone d'appontage/décollage d'un aéronef et d'un hangar ;
- la figure 2 illustre un exemple de réalisation de moyens en forme de chariot de manutention d'un tel aéronef entrant dans la constitution d'une plateforme selon l'invention, et
- les figures 3, 4, 5 et 6 illustrent de façon schématique la structure et le fonctionnement de moyens formant ventouse entrant dans la constitution d'un tel chariot de manutention.

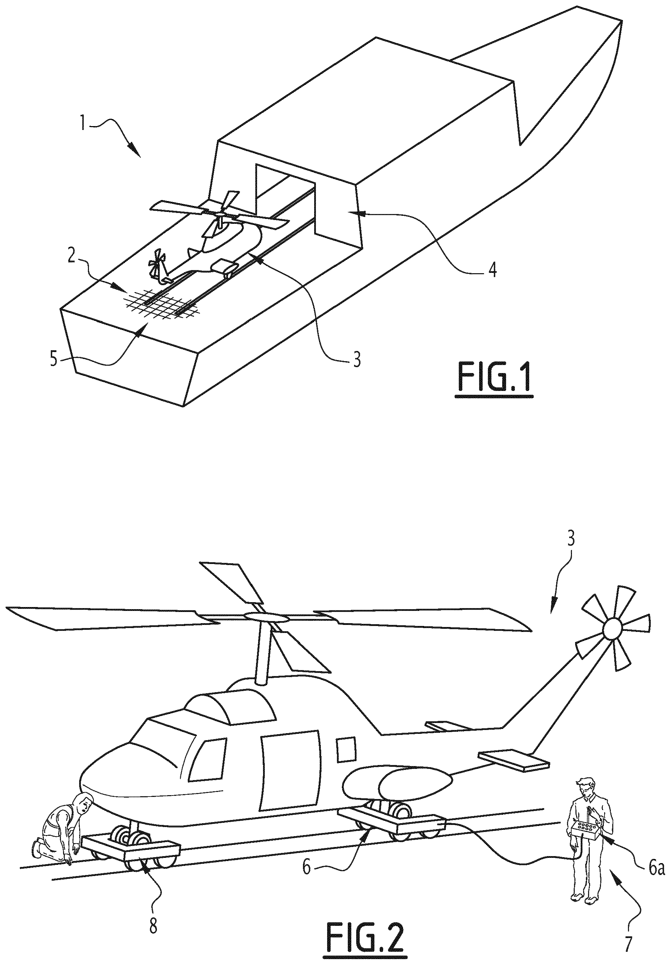

On a en effet illustré sur ces figures et en particulier sur la figure 1, une plateforme navale qui est désignée par la référence générale 1.

Dans l'exemple de réalisation illustré sur cette figure 1, la plateforme navale 1 est constituée par un bâtiment de surface tel qu'une corvette ou une frégate.

Bien entendu et comme cela a déjà été indiqué précédemment, d'autres exemples de plateformes peuvent être envisagés.

Dans l'exemple décrit, la plateforme navale 1 comporte, dans sa partie arrière, une zone d'appontage/décollage désignée par la référence générale 2, pour un aéronef désigné par la référence générale 3, constitué, dans l'exemple décrit, par un aéronef à voilure tournante tel qu'un hélicoptère.

La plateforme 1 est également munie, dans l'exemple décrit, d'un hangar 4 de stockage de cet hélicoptère à proximité de cette zone d'appontage/décollage 2.

On notera également que la zone d'appontage/décollage 2 de de la plateforme 1 peut par exemple, être équipée d'une grille de harponnage pour l'aéronef 3.

Cette grille est désignée par la référence générale 5 sur cette figure.

La structure de cette grille 5 et celle des moyens d'harponnage de l'hélicoptère étant bien connues dans l'état de la technique, on ne les décrira pas plus en détails par la suite.

On notera simplement que cette grille 5 est adaptée pour recevoir par exemple, un harpon porté par l'hélicoptère afin de sécuriser la position de celui-ci sur la plateforme 1 et plus particulièrement au-dessus de cette grille.

Comme cela a été indiqué précédemment, l'hélicoptère doit pouvoir être déplacé entre la zone de décollage/appontage 2 et le hangar 4 de la plateforme 1.

A cet effet, on utilise des moyens en forme de chariot de manutention de l'aéronef 3 pour le déplacer.

De tels moyens sont en effet mis à la disposition du personnel embarqué pour les assister lors de ces manoeuvres.

On a illustré sur la figure 2, un exemple de réalisation d'un tel chariot.

Sur cette figure 2, l'aéronef est toujours désigné par la référence générale 3 et les moyens en forme de chariot de manutention de cet aéronef 3, sont désignés par la référence générale 6.

Ce chariot de manutention 6 est, comme cela a été indiqué précédemment, équipé de moyens permettant de saisir l'aéronef 3, par exemple au niveau de son train principal d'atterrissage.

Ce chariot est également équipé de moyens de stockage d'énergie et de moyens de motorisation permettant à un opérateur de le piloter afin de déplacer l'aéronef 3.

A cet effet, ce chariot 6 peut par exemple être télé-opéré par un opérateur désigné par la référence générale 7 sur cette figure 2, pour contrôler ses déplacements sur la zone d'appontage/décollage 2, à l'aide par exemple d'un boîtier de commande à distance 6a mis à sa disposition.

Ce boîtier comporte alors des organes de commande permettant à l'opérateur de piloter à distance le chariot et ses différents équipements.

Dans l'exemple de réalisation illustré sur cette figure 2, un chariot 8 de support de la partie de train avant et dans l'exemple illustré de roulettes avant de l'hélicoptère, est également utilisé pour faciliter la manouvre.

On conçoit alors que l'opérateur 7 est capable de contrôler les déplacements des moyens en forme de chariot de manutention 6 pour déplacer l'aéronef 3 sur la zone d'appontage/décollage 2 de la plateforme 1, pour déplacer cet aéronef par exemple, vers et depuis le hangar de stockage 4.

Cependant et comme cela a été indiqué précédemment, ceci doit pouvoir être réalisé par n'importe quelles conditions météorologiques et en particulier lorsque la mer est formée et qu'il y a du vent.

Comme cela a également été indiqué précédemment, la manutention de ces aéronefs 3 par ces conditions présente alors un certain nombre de risques non seulement pour les opérateurs mais également pour le matériel.

A cet effet et pour résoudre ces problèmes, les moyens en forme de chariot 6 entrant dans la constitution de la plateforme 1 selon l'invention, comportent des moyens formant ventouse d'immobilisation de ce chariot 6 et donc de sécurisation de l'aéronef 3, en position sur la zone d'appontage/décollage 2, dont le fonctionnement est déclenché par des moyens d'analyse du comportement de la plateforme 1 afin d'éviter tout risque de mouvement incontrôlé de l'aéronef 3.

Ces moyens d'analyse des mouvements de la plateforme 1 comportent, par exemple, des moyens de mesure des mouvements de roulis, de tangage, de lacet et/ou de pilonnement de la plateforme 1, afin de détecter tout risque de glissement et/ou de basculement de l'aéronef 3 et de déclencher le fonctionnement des moyens formant ventouse.

Grâce à une telle structure, on détecte alors lorsque l'aéronef 3 quitte son domaine de sécurité de déplacement sur la plateforme 1, pour déclencher le fonctionnement des moyens de sécurisation de celui-ci afin de l'immobiliser et éviter tout risque de glissement et/ou de basculement.

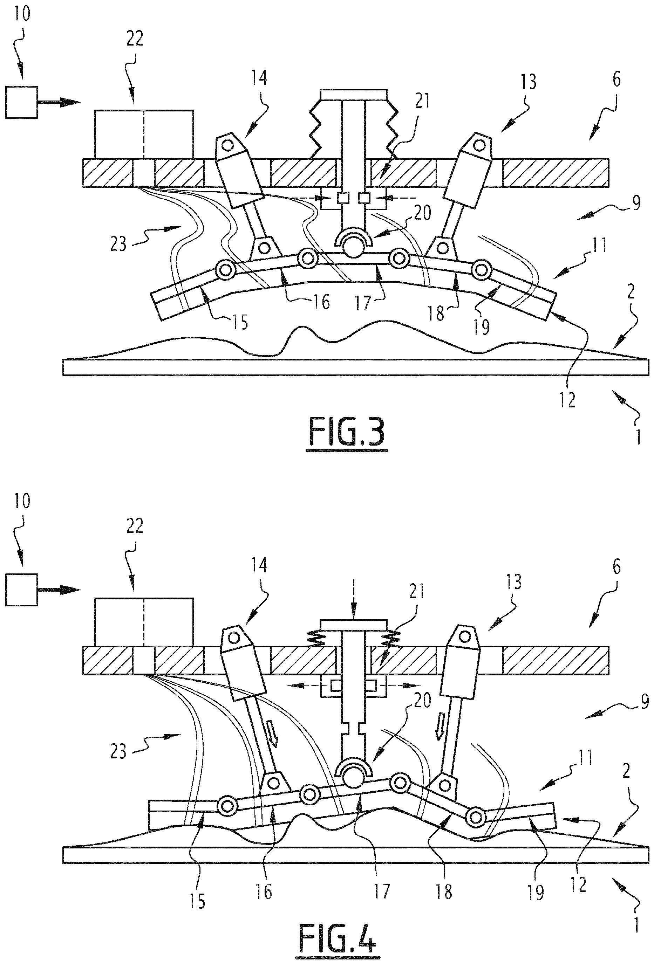

On a illustré sur les figures 3 à 6, la structure et le fonctionnement d'un exemple de réalisation de tels moyens formant ventouse entrant dans la constitution d'un tel chariot 6.

Ces moyens formant ventouse sont désignés par la référence générale 9 sur ces figures.

Sur ces figures 3 à 6, les moyens d'analyse du comportement de la plateforme 1 sont désignés par la référence générale 10.

Comme cela a été indiqué précédemment, ces moyens 10 comprennent, par exemple, des moyens permettant de mesurer les mouvements de roulis, de tangage de lacet et/ou de pilonnement de la plateforme 1, afin de détecter tout risque de glissement et/ou de basculement de l'aéronef 3, pour déclencher le fonctionnement des moyens formant ventouse 9 et sécuriser l'aéronef en position.

De tels moyens étant connus par ailleurs, ils ne seront pas décrits plus en détail par la suite.

Les moyens formant ventouse 9 comprennent quant-à-eux, une plaque de support qui est désignée par la référence générale 11 sur ces figures 3 à 6.

Cette plaque de support 11 est munie sur sa face tournée vers la plateforme, d'une couche de matériau d'adhésion et d'appui sur cette plateforme, désignée par la référence générale 12.

Sur ces figures 3 à 6, la plateforme et sa zone d'appontage/décollage sont toujours désignées par les références 1 et 2 respectivement.

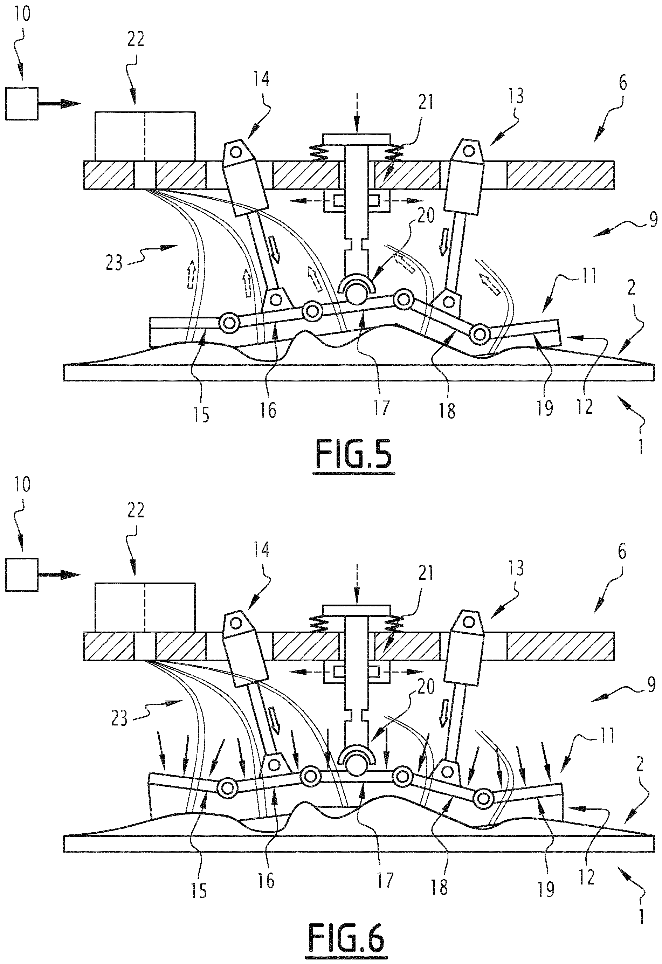

La plaque de support 11 des moyens formant ventouse 9, est également associée à des moyens d'actionnement et de déploiement de ceux-ci, permettant de les déplacer entre une position escamotée d'autorisation du déplacement de l'aéronef 3, illustrée sur la figure 3, et une position active d'immobilisation et de sécurisation de l'aéronef 3 sur la plateforme 1, illustrée sur la figure 5.

Ces moyens d'actionnement et de déploiement sont désignés par les références 13 et 14 sur ces figures et comprennent, par exemple, des vérins d'actionnement.

Comme cela est également illustré sur ces figures, la plaque de support 11 est en fait constituée par un assemblage de portions de plaque articulées les unes sur les autres.

Dans l'exemple illustré sur ces figures, cinq portions de plaque respectivement 15, 16, 17, 18 et 19 sont illustrées et sont articulées les unes sur les autres, pour former la plaque 11.

Bien entendu un nombre différent de portions de plaque peut être envisagé et différents modes de réalisation des moyens d'articulation des portions de plaque les unes sur les autres peuvent être envisagés.

Ceci permet alors, comme cela est illustré, à cette plaque de support 11 de se déformer pour épouser la forme de la plateforme 1 et plus particulièrement de la zone d'appontage/décollage 2 de celle-ci.

Comme cela est également illustré, la plaque de support 11, et dans l'exemple décrit la portion de plaque centrale 17 de celle-ci, est articulée sur le reste du chariot 6 à travers des moyens de fixation articulée à rotule.

Ces moyens à rotule sont désignés par la référence générale 20 et peuvent présenter n'importe quelle structure appropriée.

On notera également, comme cela est illustré, la présence de moyens de verrouillage en position escamotée des moyens formant ventouse 9.

Ces moyens de verrouillage sont désignés par la référence générale 21 sur ces figures et sont par exemple, destinés à maintenir la plaque de support 11 en position escamotée, tant que le déclenchement des moyens formant ventouse 9 n'est pas commandé.

Ces moyens de verrouillage présentent également n'importe quelle structure appropriée par exemple, à commande électrique, pneumatique ou hydraulique.

Il est également à noter que les moyens formant ventouse 9 sont reliés à des moyens de génération d'un vide d'air entre ceux-ci et plus particulièrement la couche d'appui 12 et la plateforme 1, en position d'immobilisation de l'aéronef 3.

Ces moyens sont par exemple, désignés par la référence générale 22 sur ces figures.

Plusieurs conduits d'aspiration tels que par exemple, celui désigné par la référence générale 23, sont alors prévus entre ces moyens de génération de vide 22 et les moyens formant ventouse 9.

En fait un tel conduit 23 peut être prévu entre les moyens de génération de vide 22 et chacune des portions de la plaque de support 11.

Ces moyens de génération de vide 22 sont alors adaptés pour aspirer l'air entre la couche de matériau d'adhésion 12 de la plaque de support 11 et la plateforme 1, afin d'améliorer encore l'immobilisation du chariot 6 et donc de l'aéronef 3, en position.

Ces moyens 22 peuvent également être utilisés en sens inverse, pour injecter de l'air entre la couche de matériau d'adhésion 12 et la plateforme 1 pour faciliter le décollement de ces moyens formant ventouse 9 de la plateforme.

Le fonctionnement de tels moyens formant ventouse 9 peut alors être décrit de la façon suivante.

Les moyens d'analyse 10 détectent toute situation potentiellement dangereuse pour l'aéronef 3, voire pour les opérateurs 7 embarqués à bord de la plateforme 1.

Ceci résulte, par exemple, d'une analyse des mouvements de la plateforme 1, analyse se traduisant par l'émission d'un signal de déclenchement des moyens en forme de ventouse 9.

Ce signal de déclenchement permet alors de déverrouiller les moyens de verrouillage 21, de provoquer l'alimentation des actionneurs 13 et 14 pour plaquer la plaque de support 11, et notamment la couche de matériau d'adhésion et d'appui 12 de celle-ci, sur la plateforme 1.

Le fonctionnement des moyens de génération de vide 22 est également déclenché pour provoquer l'aspiration de l'air entre cette couche 12 et la plateforme 1, et bloquer en position les moyens formant ventouse 9 et donc le chariot 6 de manutention de l'aéronef 3.

Ceci permet alors de sécuriser l'aéronef 3 en position afin d'éviter tout mouvement incontrôlé de celui-ci et sécuriser non seulement le matériel mais également le personnel embarqué.

Pour décoller les moyens formant ventouse 9, il est alors possible de procéder en sens inverse, en injectant de l'air entre la couche d'adhésion 12 de la plaque de support 11 et la plateforme 1, et de provoquer la remontée de la plaque de support 11 en activant les actionneurs 13 et 14, puis en verrouillant en position celle-ci grâce aux moyens de verrouillage 21.

On conçoit alors qu'une telle structure présente un certain nombre d'avantages notamment au niveau de la sécurité des opérateurs et du matériel embarqué.

En effet et dès que les moyens d'analyse 10 détectent un risque potentiel, ils déclenchent les moyens de sécurisation.

Dans la description précédente, on a illustré le cas de l'utilisation de moyens en forme de chariot 6 sur une plateforme navale 1, telle qu'un navire de surface, pour déplacer un hélicoptère entre la zone d'appontage 2 et un hangar de stockage 4.

Comme cela a été mentionné d'autres applications par exemple à d'autres plateformes telles que des plateformes offshores et à d'autres aéronefs tels que des drones à voilure tournantes ou autres, peuvent être envisagées.

Bien entendu d'autres modes de réalisation peuvent être envisagés.

## Revendications

1. Plateforme navale (1) équipée d'une zone d'appontage/décollage (2) d'au moins un aéronef (3) et de moyens en forme de chariot de manutention (6) de cet aéronef (3) pour le déplacer sur cette zone d'appontage/décollage (2), **caractérisée en ce que** les moyens en forme de chariot (6) comportent des moyens (9) formant ventouse d'immobilisation du chariot (6) et donc de sécurisation de l'aéronef (3) en position sur la zone d'appontage/décollage (2), dont le fonctionnement est déclenché par des moyens d'analyse (10) du comportement de la plateforme (1) afin d'éviter tout risque de mouvement incontrôlé de l'aéronef (3).

2. Plateforme selon la revendication 1, **caractérisée en ce que** les moyens d'analyse (10) des mouvements de la plateforme (1) comportent des moyens de mesure des mouvements de roulis, de tangage, de lacet et/ou de pilonnement de la plateforme (1) afin de détecter tout risque de glissement et/ou de basculement de l'aéronef (3) et déclencher le fonctionnement des moyens formant ventouse (9).

3. Plateforme selon l'une quelconque des revendications précédentes, **caractérisée en ce que** les moyens formant ventouse (9) comportent une plaque de support (11) munie d'une couche de matériau d'adhésion et d'appui (12) sur la plateforme (1) et associée à des moyens (13, 14) d'actionnement et de déploiement de ceux-ci, d'une position escamotée permettant le déplacement de l'aéronef (3) vers une position active d'immobilisation et de sécurisation de celui-ci.

4. Plateforme selon la revendication 3, **caractérisée en ce que** les moyens en forme de plaque (11) comprennent des portions de plaque (15, 16, 17, 18 et 19) articulées les unes sur les autres.

5. Plateforme selon la revendication 3 ou 4, **caractérisée en ce que** les moyens en forme de plaque (11) comprennent des moyens de fixation articulée sur le reste du chariot (6) à travers des moyens à rotule (20).

6. Plateforme selon l'une quelconque des revendications précédentes, **caractérisée en ce que** les moyens formant ventouse (9) sont reliés à des moyens de génération d'un vide d'air (22) entre ceux-ci et la plateforme (1), en position d'immobilisation de l'aéronef (3).

7. Plateforme selon la revendication 6, **caractérisée en ce qu'**il est prévu une pluralité de conduits d'aspiration (23) s'étendant entre les moyens formant ventouse (9) et les moyens de génération de vide (22).

8. Plateforme selon la revendication 3, **caractérisée en ce que** les moyens d'actionnement et de déploiement (13, 14) des moyens formant ventouse (9) comprennent des vérins.

9. Plateforme selon l'une quelconque des revendications précédentes, **caractérisée en ce qu'**elle comporte un hangar (4) de stockage pour l'aéronef (3) et **en ce que** les moyens en forme de chariot de manutention (6) sont adaptés pour déplacer cet aéronef (3) entre ce hangar (4) et la zone d'appontage/décollage (2).

10. Plateforme selon la revendication 9, **caractérisée en ce que** la zone d'appontage/décollage (2) est équipée d'une grille de harponnage (5) pour l'aéronef (3).

## Patentansprüche

1. Schiffsplattform (1), die mit einer Lande-/Startzone (2) für mindestens ein Luftfahrzeug (3) und Mitteln in Form eines Förderwagens (6) für dieses Luftfahrzeug (3) ausgerüstet ist, um es auf dieser Lande-/Startzone (2) zu bewegen, **dadurch gekennzeichnet, dass** die Mittel in Form eines Wagens (6) einen Sauggreifer bildende Mittel (9) zum Festlegen des Wagens (6) und somit zur Sicherung des Luftfahrzeuges (3) in Position auf der Lande-/Startzone (2) aufweisen, deren Betrieb durch Mittel (10) zur Analyse des Verhaltens der Plattform (1) ausgelöst wird, um jede Gefahr der unkontrollierten Bewegung des Luftfahrzeugs (3) zu vermeiden.

2. Plattform nach Anspruch 1, **dadurch gekennzeichnet, dass** die Mittel (10) zur Analyse der Bewegungen der Plattform (1) Mittel zum Messen der Roll-, Nick-und Gierbewegungen und/oder der Dünung der Plattform (1) aufweisen, um jede Gefahr des Gleitens und/oder des Kippens des Luftfahrzeuges (3) zu detektieren und den Betrieb der den Sauggreifer bildenden Mittel (9) auszulösen.

3. Plattform nach einem beliebigen der vorhergehenden Ansprüche, **dadurch gekennzeichnet, dass** die den Sauggreifer bildenden Mittel (9) eine Trägerplatte (11) aufweisen, die mit einer Schicht (12) eines Materials zum Haften und Abstützen auf der Plattform (1) und Mitteln (13, 14) zum Betätigen und zum Ausfahren derselben von einer eingefahrenen Position, die die Bewegung des Luftfahrzeugs (3) in eine aktive Position der Festlegung und Sicherung desselben ermöglicht, ausgerüstet ist.

4. Plattform nach Anspruch 3, **dadurch gekennzeichnet, dass** die Mittel in Form einer Platte (11) Plattenabschnitte (15, 16, 17, 18 und 19) umfassen, die gelenkig miteinander verbunden sind.

5. Plattform nach Anspruch 3 oder 4, **dadurch gekennzeichnet, dass** die Mittel in Form einer Platte (11) Mittel zum Befestigen umfassen, die an dem Rest des Wagens (6) über Gelenkmittel (20) angelenkt sind.

6. Plattform nach einem beliebigen der vorhergehenden Ansprüche, **dadurch gekennzeichnet, dass** die einen Sauggreifer bildenden Mittel (9) mit Mitteln (22) zur Erzeugung eines Unterdrucks zwischen diesen und der Plattform (1) in der Position der Festlegung des Luftfahrzeuges (3) verbunden sind.

7. Plattform nach Anspruch 6, **dadurch gekennzeichnet, dass** eine Mehrzahl von Ansaugkanälen (23) sich zwischen den einen Sauggreifer bildenden Mittel (9) und den Mitteln (22) zur Erzeugung des Unterdrucks erstreckt.

8. Plattform nach Anspruch 3, **dadurch gekennzeichnet, dass** die Mittel (13, 14) zum Betätigen und Ausfahren der einen Sauggreifer bildenden Mittel (9) Kolben-Zylinderanordnungen aufweisen.

9. Plattform nach einem beliebigen der vorhergehenden Ansprüche, **dadurch gekennzeichnet, dass** sie einen Hangar (4) zum Lagern des Luftfahrzeuges (3) aufweist und dass die Mittel in Form eines Fördererwagens (6) angepasst sind, dieses Luftfahrzeug (3) zwischen diesem Hangar (4) und der Lande-/Startzone (2) zu bewegen.

10. Plattform nach Anspruch 9, **dadurch gekennzeichnet, dass** die Lande-/Startzone (2) mit einem Hapuniergitter (5) für das Luftfahrzeug ausgerüstet ist.

## Claims

1. A naval platform (1) equipped with a deck-landing/takeoff zone (2) for at least one aircraft (3) and dolly-type means (6) for handling said aircraft (3) to move it over said deck-landing/takeoff zone (2), **characterized in that** the dolly-type means (6) include means (9) forming a vacuum disc for immobilizing the dolly (6) and thereby securing the aircraft (3) in position on the deck-landing/takeoff zone (2), the operation of which is triggered by means (10) for analyzing the behavior of the platform (1) in order to avoid any risk of uncontrolled movement of the aircraft (3).

2. The platform according to claim 1, **characterized in that** the means (10) for analyzing the movements of the platform (1) include means for measuring the roll, pitch, yaw and/or heave movements of the platform (1) in order to detect any slippage and/or tilting movements of the aircraft (3) and to trigger the operation of the vacuum disc means (9).

3. The platform according to any one of the preceding claims, **characterized in that** the vacuum disc means (9) include a support plate (11) provided with a layer of adhesive and bearing material (12) on the platform (1) and associated with means (13, 14) for actuating and deploying the latter, from a retracted position allowing the movement of the aircraft (3) toward an inactive position for immobilizing and securing the latter.

4. The platform according to claim 3, **characterized in that** the plate means (11) comprise plate portions (15, 16, 17, 18 and 19) articulated on one another.

5. The platform according to claim 3 or 4, **characterized in that** the plate means (11) comprise fastening means articulated on the rest of the dolly (6) through ball joint means (20).

6. The platform according to any one of the preceding claims, **characterized in that** the vacuum disc means (9) are connected to means for generating an air space (22) between them and the platform (1), in the immobilization position of the aircraft (3).

7. The platform according to claim 6, **characterized in that** a plurality of suction ducts (23) are provided extending between the vacuum disc (9) means and the vacuum generating means (22).

8. The platform according to claim 3, **characterized in that** the actuating and deployment means (13, 14) of the vacuum disc means (9) comprise cylinders.

9. The platform according to any one of the preceding claims, **characterized in that** it includes a storage hangar (4) for the aircraft (3) and **in that** the dolly means (6) are suitable for moving said aircraft (3) between said hangar (4) and the deck-landing/takeoff zone (2).

10. The platform according to claim 9, **characterized in that** the decklanding/takeoff zone (2) is equipped with a harpoon grate (5) for the aircraft (3).
